Europäisches Patentamt

European Patent Office

Office européen des brevets

(11) Publication number: **0 372 435**
**A2**

## (12) EUROPEAN PATENT APPLICATION

(21) Application number: **89122256.4**

(51) Int. Cl.5: **G01S 13/00, G01S 13/50**

(22) Date of filing: **02.12.89**

(30) Priority: **08.12.88 ZA 889202**
**25.04.89 ZA 893044**
**31.08.89 ZA 896692**

(43) Date of publication of application:
**13.06.90 Bulletin 90/24**

(84) Designated Contracting States:
**AT BE CH DE ES FR GB GR IT LI LU NL SE**

(71) Applicant: **CSIR**
**Administration Building Scientia**
**Pretoria Transvaal Province(ZA)**

(72) Inventor: **Van Zyl Smit, Hendrik**
**10 Snyman Road**
**Navors, Pretoria, Transvaal Province(ZA)**

(74) Representative: **Maxton, Alfred et al**
**Patentanwälte Maxton Maxton Langmaack**
**Goltsteinstrasse 93 VII Postfach 51 08 06**
**D-5000 Köln 51(DE)**

(54) **Monitoring system.**

(57) A method of monitoring and a system for monitoring the distance between two objects (10, 14) moving relative to one another is disclosed. The method includes transmitting a continuous radio wave signal via at least one antenna (12) from one or other of the objects. Waves reflected off the object remote from the antenna (12) are received and the reflected signal is superimposed on the transmitted signal. Variations in the frequency of the signal transmitted caused by superimposition of the two signals are detected. The system includes at least one radio wave signal generator (11) which is closely coupled with at least one antenna (12) for transmitting a continuous radio wave signal from the antenna. The signal generator (11) is mounted on either one of the two objects and is capable of receiving a radio wave signal reflected from the object remote from the antenna. At least one detection means (40) responsive to the radio wave signal generator is operable to monitor variations in the frequency of the transmitted signal caused by superimposition of the reflected signal on the transmitted signal.

FIG 1

FIG 2

EP 0 372 435 A2

## Monitoring System

THIS INVENTION relates to a monitoring system. It relates in particular to a monitoring system for monitoring distances between two objects, at least one of which objects is a moving object.

When a first object such as a shell, anti-aircraft missile, or the like, is fired at a second object, eg a target, such as an aircraft, ship, or the like, and the first object misses the second object, it is difficult to determine with accuracy the distance (hereinafter referred to as the miss distance) by which the first object misses the second object. It would also be desirable to be able to determine the trajectory of the first object relative to the second object. It is an object of this invention to offer a solution to this problem.

In accordance with the invention, a method of monitoring the distance between two objects moving relative to one another, includes transmitting a continuous radio wave signal via at least one antenna from one or other of the objects, receiving waves reflected off the object remote from the antenna, superimposing the reflected signal on the transmitted signal, and detecting variations in the frequency of the signal transmitted caused by superimposition of the two signals.

Further according to the invention there is provided a monitoring system for monitoring the distance between two objects moving relative to one another, the system including

at least one radio wave signal generator which is closely coupled with at least one antenna for transmitting a continuous radio wave signal from the antenna, the signal generator being capable of being mounted on either one of the two objects and being capable of receiving a radio wave signal reflected from the object remote from the antenna,

and at least one detection means responsive to the radio wave signal generator operable to monitor variations in the frequency of the transmitted signal caused by superimposition of the reflected signal on the transmitted signal.

The variations in the frequency may be determined either graphically or mathematically, the pattern of the frequency shifts being representative of the distance by which the one object, eg a shell, misses the other object, eg a target. The system may accordingly include recording means for recording the variations in frequency as the objects move relative to one another, eg the shell approaches the target.

The method may include simultaneously transmitting a plurality of signals, eg two or three signals, at different frequencies and from spaced positions, thereby to permit determination of the miss distance two or three dimensionally. In this way, the relative positioning of the objects at various positions can be determined, thereby to enable the trajectory of the objects relative to each other to be determined. The system may accordingly include at least two signal generators and at least two detection means, the signal generators being located at spaced positions.

Detection of frequency shifts may be accomplished by a frequency modulation receiver having a discriminator, a phase-locked oscillator, a frequency detector, or the like. Another type of frequency modulation detection device converts the frequency modulation to a pulse-rate modulation, which can be converted to the desired signal by use of an integrating circuit. The frequency modulation receiver can be located at a location remote from the signal generator.

In a preferred form, the detection means may include a frequency modulation receiver connected to a zero crossing detector operable to detect whenever the signal received crosses a zero value, ie when the signal moves from positive to negative or vice versa, and a period measuring means operable to detect the time period between successive zero crossings of the signal. The detection means may further include a threshold detector operable to filter out signals below a predetermined threshold value, eg caused by noise or by signals reflected off other relatively moving objects, and the like. The period measuring means may be connected to a computer directly or via a buffer for storing the signals until the computer has sufficient time to process the signals. The buffer may be in the form of a FIFO (first in first out) unit, random access memory, or the like.

The signal generator may be in the form of an oscillator closely coupled with at least one antenna.

In order to increase the range of the system, in one embodiment, the reflected signal may be amplified. This may be achieved by locating first and second antennas which are virtually invisible to each other and by transmitting the signal from the first antenna and receiving the reflected signal via the second antenna and then amplifying the signal received by the second antenna and then superimposing the amplified reflected signal on the signal generated in the first antenna.

In this way the effect of the reflected signal is magnified thereby giving larger variations in the frequency of the signal transmitted. If desired, a plurality of series connected amplifiers may be provided intermediate the second antenna and the first antenna. Preferably, amplification by a factor of about 1000 is provided. Typically, the reflected signal is 100000 to 200000 times smaller in magnitude than the transmitted signal and with an amplification factor of 1000, the amplified reflected signal is then only 100 to 200 times smaller than the transmitted signal. The amplifier may be in the form of a TV antenna amplifier. The first and second antennas may be in the form of dipole antennas orientated in alignment to make them virtually invisible to one another, in the form of helix antennas located with opposite polarities, or the like.

In another embodiment, a single antenna may be used in conjunction with a device such as a directional coupler which minimizes attenuation of the reflected signal. The directional coupler may then be used in conjunction with an amplifier to form the oscillator providing the signal generator.

The system may further include a computer operable mathematically to calculate the miss distance and/or the trajectory of one of the objects relative to the antenna.

An embodiment of the invention is now described by way of example with reference to the accompanying drawings in which:-

FIGURE 1 shows a block schematic diagram of a monitoring system in accordance with the invention;

FIGURE 2 is a schematic representation of a shell approaching a target along an intercept path which is co-incident with a radius of the target;

FIGURE 3 is a graphical representation of the radio signal transmitted by an oscillator provided on the target and modulated by echoes from the shell of Figure 2;

FIGURE 4 is a schematic representation of a shell similar to the shell of Figure 2, approaching the target along a flight path which does not intercept the target;

FIGURE 5 is a graphical representation of the radio signal transmitted by the oscillator and modulated by the echoes from the shell of Figure 4;

FIGURE 6 is a schematic representation of a shell similar to the shells of Figures 2 and 4, approaching the target along a flight path which also does not intercept the target and misses the target by a greater miss distance than the miss distance of Figure 4;

FIGURE 7 is a graphical representation of the radio signal transmitted by the oscillator and modulated by the echoes from the shell of Figure 6;

FIGURES 8 and 9 show schematic diagrams of further modifications of the signal generator of the monitoring system; and

Figure 10 shows a schematic block diagram of one form of detection means used in the monitoring system.

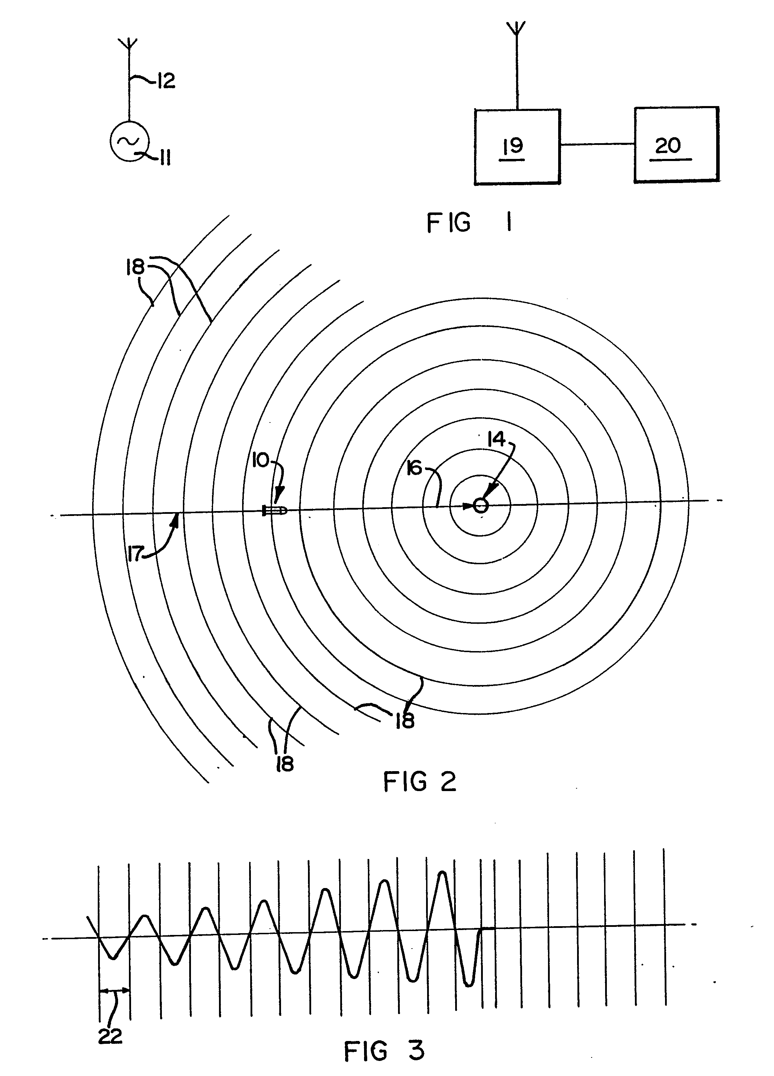

Referring to the drawings, reference numeral 10 in Figure 2 generally indicates a shell which may be a practice shell used in target practice and which is of metal capable of reflecting radio waves. Monitoring of the shell 10 is achieved by a radio frequency oscillator 11 which is closely coupled with an antenna 12 (see Figure 1) operable to transmit a continuous radio wave signal. When the oscillator 11 is closely coupled with its antenna 12, the frequency of the oscillator can be affected by objects in its vicinity as the object in effect varies the impedance of the antenna.

The oscillator 11 and antenna 12 are carried by a target 14 in the embodiment illustrated. If, instead of a practice shell, the shell 10 is in the form of a high explosive shell having a proximity fuze then the oscillator 11 could be included in the proximity fuze of the shell 10.

In Figure 2, the shell 10 is in the process of being fired towards the target 14 and is travelling in the direction shown by arrow 16 along an intercept path 17 which is co-incident with a radius of the target 14.

As the shell 10 approaches the target 14, continuous radio waves transmitted by the oscillator 11 are reflected by the shell 10 and echoes are thereby formed which cause the transmitted signal to be modulated by the superimposition of the reflected signal on the transmitted signal. Lines 18 represent contour lines of the wave fronts, each line representing a position where the shell 10 does not affect the frequency of the oscillator 11 as the reflected signal is either in phase or in anti-phase with the transmitted signal. In other words in these positions the shell 10 will only affect the amplitude of the transmitted signal and not its frequency. In all other positions the oscillator frequency is either increased or decreased by the presence of the shell 10.

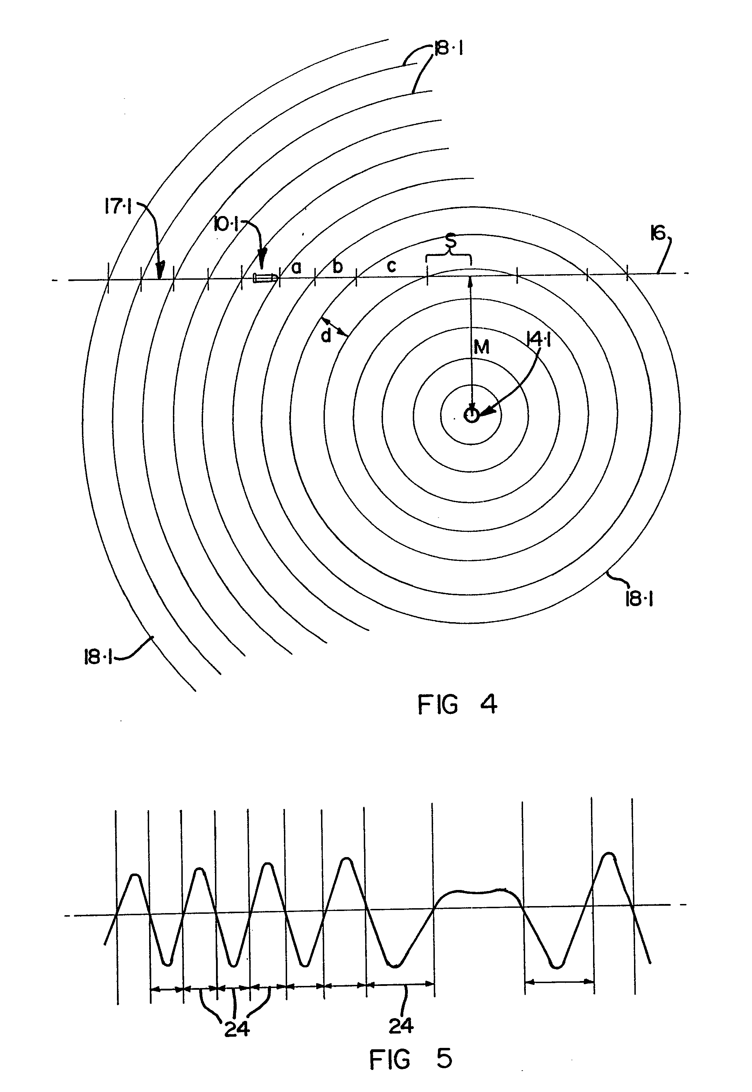

Because the approach path of the shell 10 is co-incident with a radius of the target 14 in Figure 2, no frequency shift is discernible from the wave pattern of the modulated waves and the so-called FM Doppler wavelength is constant as shown in Figure 3.

A frequency modulation receiver including a frequency detector 19 (see Figure 1) is located remote from the oscillator 11, eg. on the around. The frequency modulation receiver is tuned to the frequency of the oscillator 11. The frequency detector 19 is connected to graphical recording means 20 capable of receiving and graphically recording the wave pattern shown in Figures 3, 5 and 7, as the shell 10 approaches the target 14. The waves reflected from the shell 10 and received by the antenna 12 cause the wave pattern of the oscillator 11 to be frequency modulated dependent upon the phase shift relationship

3

between the transmitted and reflected waves. Variations or shifts in the frequency of the wave pattern can then be detected by the frequency detector 19 and the wave pattern can be recorded graphically by the recording means 20. The constant Doppler wavelength is indicated by reference numeral 22 in Figure 3.

In each of Figures 4 and 6, shells 10.1 and 10.2 similar to the shell 10 of Figure 2 are shown approaching targets 14.1 and 14.2 similar to the target 14 of Figure 2. However, the respective flight paths 17.1, 17.2 of the shells 10.1, 10.2 are such that they will miss the targets 14.1, 14.2. If the shells 10.1 and 10.2 contain proximity fuzes, they may not come within a lethal range of the targets 14.1 and 14.2.

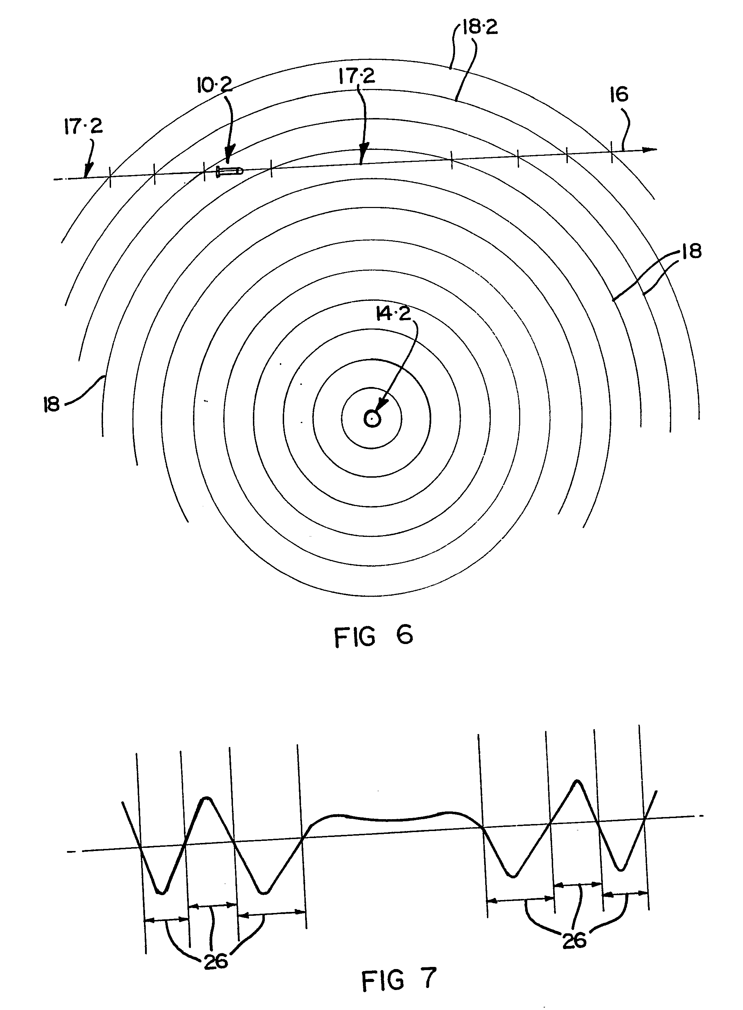

It will be noted in Figures 5 and 7 that the respective Doppler wavelengths are not constant as indicated by reference numerals 24 and 26 respectively.

By comparing Figures 5 and 7, it can clearly be seen that the graphical representations of the wave lengths are characteristic of the respective miss distances of the shells 10.1, 10.2 from intercept paths 17.1, 17.2, and hence from the targets 14.1, 14.2.

Experience and/or prior calibration of the recording means 20 enables the miss distances to be determined from the graphs of Figures 5 and 7. Instead, or in addition, the frequency detector 19 may be linked to a computer and the miss distance may be calculated mathematically.

Although not critical, the frequency selected for transmittal by the oscillator 11 is preferably related to the length of the shell with the wave length of the transmitted signal preferably equal to about twice the length of the shell. Thus with a shell length of about 300 mm, the frequency of the transmitted signal would be in the region of 500 MHz, ie having a wave length of approximately 600 mm. Generally, with higher frequencies, a greater accuracy is obtained in determining the miss distance of the shell.

If, instead of a single oscillator 11, three or more spaced oscillators are provided each transmitting signals at different frequencies, and the modulated signals are detected and recorded separately, then the flight path or trajectory of the shell relative to the target can be determined three dimensionally. The three oscillators can for example be mounted on the outer ends of the wings and on the tail of a drone used for target practice and towed by an aircraft or on the outer ends of the wings and on the tail of a model aircraft used for target practice. If the exact direction of travel of the shell is known, only two oscillators would be necessary.

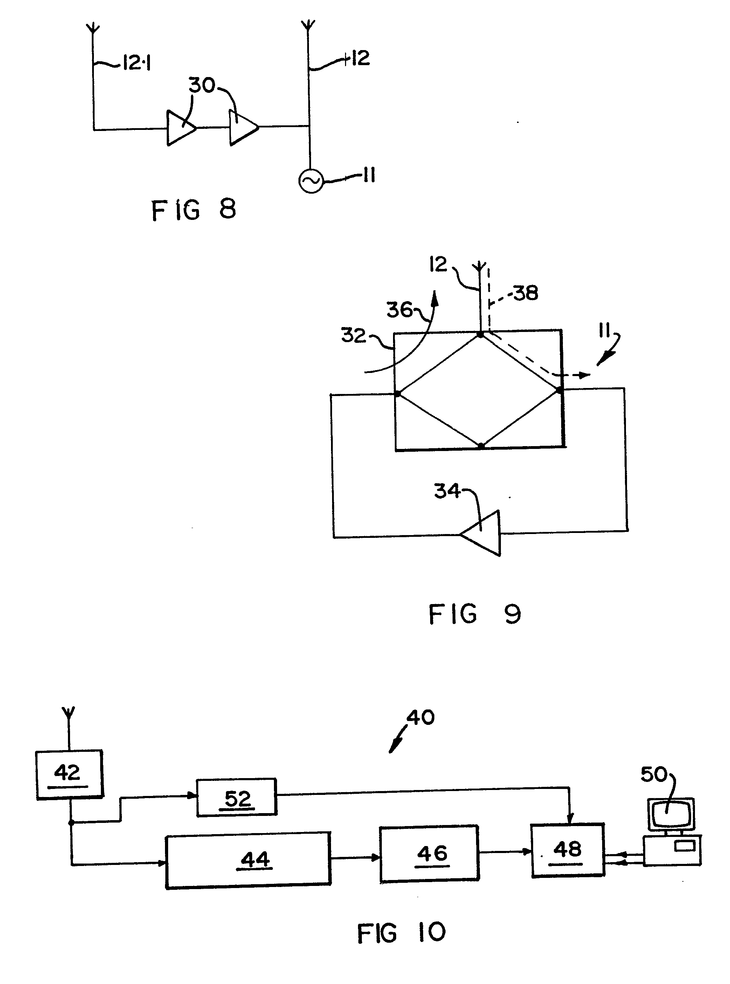

In Figure 8 a modification of the system is illustrated wherein, instead of a single antenna 12 as in the Figure 1 embodiment, a pair of antennas 12 and 12.1 are used. The antenna 12 is used to transmit the signal from the signal generator 11 and the antenna 12.1 is used to receive the reflected signal from the shell 10. A pair of series connected TV antenna amplifiers 30 amplify the reflected signal received by the antenna 12.1 and then superimpose the reflected signal on the transmitted signal to vary the frequency of the signal generator 11. If desired, a filter could be provided intermediate the two amplifiers 30 to filter out all frequencies except a narrow band of frequencies. Also, the signal generator 11 could be omitted as the two antennas 12 and 12.1 together with the amplifiers 30 could serve as an oscillator.

In Figure 9, a further modification is shown where, like in Figure 1, a single antenna 12 is used. The antenna 12 is connected to an oscillator 11 formed by a directional coupler 32 and an amplifier 34. The transmitted signal indicated by arrow 36 is again transmitted from the antenna 12 and the reflected signal indicated by arrow 38 is received by the antenna 12. The directional coupler however minimizes attenuation of the reflected signal 38 and this is again superimposed on the signal generated to vary its frequency which variation can again be detected.

In Figure 10, reference numeral 40 generally indicates a preferred form of detection means used in the system. It includes a frequency modulation receiver 42 connected to a zero crossing detector 44 (which could also be in the form of a phase lock loop) and which detects whenever the signal crosses a zero value and goes from positive to negative or vice versa. The zero crossing detector 44 is connected to a period measuring means 46 which determines the time period between successive zero crossings of the FM Doppler signal. The signal is then fed to a FIFO (first in first out) unit 48 and then to a computer 50. A threshold detector 52 is connected intermediate the frequency modulation receiver 42 and the FIFO unit 48 and is arranged to filter out unwanted signals, eg noise signals below a predetermined threshold value, thereby to verify the integrity of the signals processed by the computer 50.

When the velocity of the shell is unknown a minimum of three cycles is needed to calculate the miss distance M according to the following formula:

4

$$S = \frac{a^2 - 2b^2 + c^2 + 2ac + 2ab - 4bc}{4b - 2c - 2a}$$

$$d = \left[ 0,5 \ (a^2 - b^2) + S \ (a - b) + ac + ab - bc \right]^{\frac{1}{2}}$$

$$M = \left[ \frac{4S^2c^2 + c^4 + d^4 + 4Sc^3 - 2c^2d^2 - 4Scd^2 - 4S^2d^2}{4d^2} \right]^{\frac{1}{2}}$$

where S, M, a, b, c and d are as shown in Figure 4, ie a, b, and c represent the time period between any three successive zero crossings or sets of zero crossings detected by the period measuring means 46 other than the zero crossings mentioned below, d represents a half wavelength, S represents the distance between the position of the shell at the zero crossing immediately prior to the minimum position and its position at the minimum miss distance, and M represents the minimum miss distance. It should be noted that the formulae will not hold true if any one of a, b and c extend between the zero crossings closest to and on either side of the target 14.1, ie the zero crossings immediately prior to and immediately after the minimum miss distance M and indicated immediately above the target 14.1 in Figure 4. It will be appreciated further that a, b and c can also represent time periods between zero crossings occurring after the shell 10.1 has passed the target 14.1. Also, subject to the above, a, b and c need not be restricted to time periods between immediately successive zero crossings, eg a, b and c could each comprise the time period between two or more immediately successive sets of zero crossings.

The invention illustrated provides a monitoring system which is simple but which, it is believed, can be used accurately to determine the miss distance of two relatively moving objects, at least one of which is travelling at a substantially constant but unknown speed, eg the miss distance of the shell 10 from the target 14, to enable a subsequent shell to be aimed more accurately. When a plurality of transmitters are used, not only the miss distance, but also the trajectory of the shell relative to the target can be determined. The system can be used with the oscillator on a stationary target or on a moving target or the oscillator can be incorporated into the shell.

## Claims

1. A method of monitoring the distance between two objects (10,14) moving relative to one another, characterised in that it includes transmitting a continuous radio wave signal via at least one antenna (12) from one or other of the objects, receiving waves reflected off the object (10) remote from the antenna (12), superimposing the reflected signal on the transmitted signal, and detecting variations in the frequency of the signal transmitted caused by superimposition of the two signals.

2. A method as claimed in claim 1, characterised in that it includes simultaneously transmitting a plurality of signals at different frequencies and from spaced positions, thereby to permit determination of the miss distance (M) two or three dimensionally.

3. A method as claimed in claim 1 or claim 2, characterised in that it includes locating first and second antennas (12,12.1) which are virtually invisible to each other and by transmitting the signal from the first antenna (12) and receiving the reflected signal via the second antenna (12.1) and then amplifying the signal received by the second antenna (12.1) and then superimposing the amplified reflected signal on the signal generated in the first antenna (12).

4. A monitoring system for monitoring the distance between two objects (10,14) moving relative to one another, characterised in that the system includes
at least one radio wave signal generator (11) which is closely coupled with at least one antenna (12) for transmitting a continuous radio wave signal from the antenna (12), the signal generator (11) being capable of being mounted on either one of the two objects (10,14) and being capable of receiving a radio wave signal reflected from the object (10) remote from the antenna (12),
and at least one detection means (40) responsive to the radio wave signal generator (11) operable to monitor variations in the frequency of the transmitted signal caused by superimposition of the reflected signal on the transmitted signal.

5. A system as claimed in claim 4, characterised in that it includes recording means (20) for recording the variations in frequency as the objects (10,14) move relative to one another.

6. A system as claimed in claim 4 or claim 5, characterised in that it includes at least two signal generators (11) and at least two detection means (40), the signal wave generators (11) being located at spaced positions.

7. A system as claimed in any one of the preceding claims 4 to 6, characterised in that the detection means (40) includes a frequency modulation receiver (42) connected to a zero crossing detector (44) operable to detect whenever the signal received crosses a zero value, ie when the signal moves from positive to negative or vice versa, and a period measuring means (46) operable to detect the time period between successive zero crossings of the signal.

8. A system as claimed in claim 7, characterised in that the detection means (40) further includes a threshold detector (52) operable to filter out signals below a predetermined threshold value.

9. A system as claimed in claim 7 or claim 8, characterised in that the period measuring means (46) is connected to a computer (50) via a buffer (48) for storing the signals until the computer (50) has sufficient time to process the signals.

10. A system as claimed in any one of the preceding claims 4 to 9, characterised in that the signal generator (11) is in the form of an oscillator closely coupled with at least one antenna (12).

11. A system as claimed in any one of the preceding claims 4 to 10, characterised in that it includes first and second antennas (12,12.1) located so that they are virtually invisible to each other, the signal being transmitted from the first antenna (12) and the reflected signal being received via the second antenna (12.1) and at least one amplifying means (30) operable to amplify the signal received by the second antenna before superimposition of the amplified reflected signal on the signal generated in the first antenna (12).

12. A system as claimed in claim 11, characterised in that the amplifying means (30) is in the form of a TV antenna amplifier and the first and second antennas (12,12.1) are in the form of dipole antennas orientated in alignment to make them virtually invisible to one another.

13. A system as claimed in any one of the preceding claims 4 to 10, characterised in that a single antenna (12) is used in conjunction with a directional coupler (32) operable to minimise attenuation of the reflected signal.

6

FIG 1

FIG 2

FIG 3

FIG 4

FIG 5

FIG 6

FIG 7

FIG 8

FIG 9

FIG 10